# EUROPEAN PATENT SPECIFICATION

(11) **EP 3 777 612 B1**
(45) Date of publication and mention of the grant of the patent: **06.08.2025**
(21) Application number: 19878296.3
(22) Date of filing: 31.10.2019
(51) Int. Cl.: A47C 1/02, A61G 5/14, A61G 5/10

(54) **IRON FRAME FOR STAND-ASSISTED RECLINER DRIVEN BY DUEL MOTORS AND WORKING METHOD THEREOF**
EISENRAHMEN FÜR STEHHILFE-LIEGESTUHL MIT DUALEM MOTORANTRIEB UND BETRIEBSVERFAHREN DAFÜR
CHÂSSIS EN FER POUR SIÈGE INCLINABLE SUR PIED ENTRAÎNÉ PAR DES MOTEURS À DOUBLE ROTOR ET SON PROCÉDÉ DE FONCTIONNEMENT

(30) Priority: 02.11.2018 CN 201811298298
(43) Date of publication of application: 17.02.2021
(73) Proprietor: Changzhou Zehui Machinery Co., Ltd., Changzhou, Jiangsu 213174 (CN)
(72) Inventor: ZHU, Liming, Changzhou, Jiangsu 213174 (CN); ZHANG, Zhixing, Changzhou, Jiangsu 213174 (CN)
(74) Representative: Weickmann & Weickmann PartmbB
(86) International application number: PCT/CN2019/114516
(87) International publication number: WO 2020/088552

(56) References cited:
- CN-A- 104 770 999
- CN-A- 107 157 163
- CN-A- 109 288 290
- CN-U- 209 090 419
- DE-A1- 4 408 458
- DE-U1- 20 207 316
- US-A1- 2001 035 668
- US-A1- 2005 077 852
- US-A1- 2005 134 100
- US-A1- 2014 291 950

## Description

### TECHNICAL FIELD

The present invention relates to the technical field of sofa accessories, and in particular, to an iron frame for a dual-motor driven, stand-assisting recliner and an operating method therefor.

### BACKGROUND

Recliners are essential furniture in many homes. With the continuous improvement of people's living standards, electric sofa recliners gradually enter ordinary people's homes. An electric sofa recliner is an electric sofa with an automatically adjustable backrest. The covering is usually made of high-quality genuine cowhide. The padding is high-grade sponge. The body structure is supported by a retractable recliner iron frame. The electric sofa recliner is fashionable and beautiful and is widely applied to homes, companies, among other places. Electric sofa recliners are a new chapter in the leisure industry and furniture industry. An electric sofa recliner can ingeniously integrate the practicability of furniture, the leisure aspect, and a high-tech, automated design. Examples are known from US2001/035668), US2014/291950, DE4408458, and/or DE20207316.

An existing iron frame for a recliner usually has a lying-flat position, a crossed-leg position, an upright sitting position, and the like. Many iron frames for a recliner, for example, those disclosed in Chinese Patent (Granted) Publications No. CN202892335U, No. CN203538831U, and No. CN203314481U have the foregoing functions. The iron frames for a recliner disclosed in the foregoing patent documents do not have a stand-assisting function. It is very inconvenient for some elderly and disabled people to use such iron frames for a recliner. To overcome the foregoing disadvantages, Chinese Patent (Granted) Publication No. CN203986974U discloses a dual-motor drive mechanism for a recliner, including a base, a first drive head, a second drive head, a tail adjustment support assembly, and a middle adjustment support assembly being disposed on the base. The first drive head drives the tail adjustment support assembly to enable the tail adjustment support assembly to enter an erect state, a lying state or an inclined state. The middle adjustment support assembly is correspondingly connected to a front adjustment linkage portion. The second drive head drives the middle adjustment support assembly to raise or lower to enable the middle adjustment support assembly to enter an erect state or a lying state, and drives the front adjustment linkage portion to enable the front adjustment linkage portion to enter an unfolded state or a retracted state. In the retracted state, the front adjustment linkage portion is locked by the tail adjustment support assembly, and in the unfolded state, the front adjustment linkage portion is released by the tail adjustment support assembly. The dual-motor drive mechanism for a recliner can implement various functions of extending and retracting a recliner footrest, raising and lowering the recliner frame, tilting and erecting a backrest, and the like. Some special users need to lie on a recliner with the feet higher than the head to enable blood in the feet to quickly flow to the head or achieve other corresponding objectives. Existing recliner structures cannot implement the foregoing functions.

### SUMMARY

The technical problem to be resolved in the present invention is to provide an iron frame for a dual-motor driven, stand-assisting recliner that has a simple structure and can implement the function of keeping the feet higher than the head and an operating method therefor, in accordance with claims 1 and 4.

To resolve the technical problem described above, an iron frame for a dual-motor driven, stand-assisting recliner provided in the present invention includes a telescopic driving mechanism, a telescopic support, and a base, and further includes a motor support, an inclined support, an upper frame assembly, and an inclined linkage, where middle portions of two sides of the inclined support are correspondingly hinged to middle portions of two sides of the base, and the tail end of the inclined support is disposed in a raised manner; the front end of the upper frame assembly is provided with a rotatable rotating rod, two ends of the rotating rod are respectively provided with a rotating rod support, one end of the inclined linkage is correspondingly hinged to the rotating rod support, and the other end of the inclined linkage is correspondingly hinged to the tail end of the inclined support, so that the rotating rod is capable of driving, during rotation, the inclined support to move; and the motor support is disposed above the upper frame assembly, the tail end of the telescopic driving mechanism is correspondingly hinged to the rotating rod, the front end of the telescopic driving mechanism is in transmission fit with the motor support, and two ends of the motor support are respectively in transmission fit with the telescopic support, so that the telescopic driving mechanism is capable of driving, during extension or retraction, the motor support and the upper frame assembly to move, and the motor support drives the telescopic support to extend or retract.

Further, the telescopic support includes a seat board assembly, a telescopic leg board assembly, a telescopic foot board assembly, and a telescopic backrest assembly, two sides of the tail end of the seat board assembly are respectively provided with a retractable telescopic backrest assembly, two sides of the front end of the seat board assembly are respectively provided with a retractable telescopic leg board assembly, and the front end of the telescopic leg board assembly is provided with a retractable telescopic foot board assembly; and tail ends on two sides of the motor support are in transmission fit with the telescopic backrest assemblies, and front ends on two sides of the motor support are in transmission fit with the telescopic leg board assemblies, so that the motor support is capable of driving, during movement, the telescopic backrest assemblies and the telescopic leg board assemblies to extend or retract.

Further, the upper frame assembly includes an H-shaped support and a connecting bar, two sides of the front end of the seat board assembly are downwardly provided with seat board supports, the bottom of the seat board support is correspondingly hinged to the front portion of the H-shaped support, tail ends on two sides of the base are upwardly provided with base supports, tail ends on two sides of the H-shaped support are correspondingly hinged to bottoms of the base supports, the front end of the connecting bar is correspondingly hinged to a middle portion of the seat board support, and the tail end of the connecting bar is correspondingly hinged to the top of the base support; the telescopic driving mechanism includes a slide-type electric push rod, the slide-type electric push rod includes an electric push rod and a slide that are in transmission fit, the tail end of the electric push rod is correspondingly hinged to the middle portion of the rotating rod, the front end of the electric push rod is disposed toward the telescopic backrest assembly, the slide is fixedly disposed on the motor support, the slide is disposed at the middle portion of the electric push rod during assembly with the front end of the inclined support not protruding from the base, during use, the electric push rod is turned on to enable the slide to drive, when moving toward the front end of the electric push rod, the motor support to move toward the telescopic backrest assembly, the motor support drives the telescopic leg board assembly and the telescopic foot board assembly to extend, after the motor support moves to a preset position, the telescopic leg board assembly and the telescopic foot board assembly completely extend and the motor support no longer moves, the electric push rod is kept on to enable the electric push rod to move relative to the slide, that is, the electric push rod moves toward the telescopic leg board assembly, and drives the rotating rod to rotate in the forward direction, the rotating rod drives the inclined linkage to move forward, the inclined linkage drives the inclined support to rotate, and the inclined support supports the floor, so that the front end of the base is higher than the rear end of the base, that is, the telescopic leg board assembly and the telescopic foot board assembly are higher than the telescopic backrest assembly.

Further, the seat board assembly further includes a seat board cross brace and seat board vertical braces disposed on two sides, the seat board support is fixedly disposed on the lower side of the front portion of the seat board vertical brace, and the front end of each seat board vertical brace is provided with a rotating linkage in a hinged manner, the rotating linkage includes a first connecting end, a second connecting end, and a third connecting end, the middle portion of the second connecting end is correspondingly hinged to the seat board vertical brace, the third connecting end is in transmission fit with the front end of the motor support, a limit protrusion is provided between the second connecting end and the third connecting end, and the seat board vertical brace is fixedly provided with a limiting rivet, so that the motor support is capable of driving the rotating linkage to rotate, and the limit protrusion and the limiting rivet fit with each other to limit the rotation angle of the rotating linkage.

Further, the motor support includes a motor support cross brace and motor support side braces fixedly disposed on two sides of the motor support cross brace, the front end of the motor support side brace is fixedly provided with a seat board front brace, the seat board front brace is correspondingly hinged to the third connecting end of the rotating linkage, and the slide is fixedly disposed at the middle portion of the motor support cross brace, so that the electric push rod is capable of driving the motor support to move.

Further, a motor connection bracket is fixedly disposed at the middle portion of the rotating rod, and the tail end of the electric push rod is correspondingly hinged to the motor connection bracket, so that the electric push rod is capable of driving the rotating rod to rotate, thereby facilitating manipulation.

Further, the base includes a base front brace, a base rear brace, and base side braces disposed on two sides, and the inner side of the base side brace is provided with a hinge support; and the inclined support includes an inclined support cross brace and inclined support side braces disposed on two sides of the inclined support cross brace, the front end of the inclined support side brace is provided with a rotatable caster, the middle portion of the inclined support side brace is correspondingly hinged to the hinge support, and the front end of the hinge support is fixedly provided with a limit block, so that after the inclined support rotates to a preset position, the limit block may touch the inclined support side brace to limit the inclined support.

Further, the telescopic leg board assembly includes a leg board transmission linkage, a leg board front brace, a first leg board linkage and a second leg board linkage that are disposed in parallel, and a third leg board linkage and a fourth leg board linkage that are disposed in parallel, the tail end of the first leg board linkage is correspondingly hinged to the second connecting end of the rotating linkage, the tail end of the second leg board linkage is correspondingly hinged to the upper portion of the front end of the seat board vertical brace, the tail end of the third leg board linkage is correspondingly hinged to the front end of the first leg board linkage, the front end of the third leg board linkage is correspondingly hinged to the leg board front brace, the tail end of the fourth leg board linkage is correspondingly hinged to the front end of the second leg board linkage, the front end of the fourth leg board linkage is correspondingly hinged to the leg board front brace, the middle portion of the second leg board linkage is provided with a leg board rotating pin, the middle portion of the third leg board linkage is correspondingly hinged to the leg board rotating pin, the tail end of the leg board transmission linkage is correspondingly hinged to the first connecting end of the rotating linkage, and the front end of the leg board transmission linkage is correspondingly hinged to the leg board rotating pin, so that the rotating linkage is capable of driving the leg board transmission linkage and the leg board rotating pin to move, thereby implementing transformation and extension or retraction of the first leg board linkage, the second leg board linkage, the third leg board linkage, and the fourth leg board linkage.

Further, the telescopic foot board assembly includes a first foot board linkage, a second foot board linkage, a third foot board linkage, a fourth foot board linkage, and a foot board support, the tail end of the first foot board linkage is correspondingly hinged to the middle portion of the third leg board linkage, the front end of the first foot board linkage is correspondingly hinged to the tail end of the third foot board linkage, the front end of the third foot board linkage is correspondingly hinged to the foot board support, the tail end of the second foot board linkage is fixedly connected to the leg board front brace, the front end of the second foot board linkage is correspondingly hinged to the tail end of the fourth foot board linkage, the front end of the fourth foot board linkage is correspondingly hinged to the foot board support, the middle portion of the second foot board linkage is provided with a foot board rotating pin, and the middle portion of the third foot board linkage is correspondingly hinged to the foot board rotating pin, so that the third leg board linkage is capable of driving the first foot board linkage, the third foot board linkage, and the foot board support to move.

Further, the telescopic backrest assembly includes a first backrest linkage, a second backrest linkage, a third backrest linkage, and a fourth backrest linkage, the bottom of the first backrest linkage is correspondingly hinged to the seat board vertical brace, the top of the first backrest linkage is correspondingly hinged to the front end of the second backrest linkage, the upper portion of the tail end of the second backrest linkage is correspondingly hinged to the top of the third backrest linkage, the second backrest linkage is fixedly connected to the tail end of the motor support side brace, and the bottom of the third backrest linkage is fixedly connected to the fourth backrest linkage, so that the motor support is capable of driving, during movement, the first backrest linkage, the second backrest linkage, the third backrest linkage, and the fourth backrest linkage to move.

Further, omnidirectional wheels are disposed on two sides of the tail end of the base, and cushion blocks are disposed on two sides of the front end of the base.

An operating method for the foregoing iron frame for a dual-motor driven, stand-assisting recliner includes the following steps:
A. an upright sitting position: placing the slide at the middle portion of the electric push rod, so that the front end of the inclined support is flush with the bottom of the base, the base and the seat board assembly are in a horizontal state, and the telescopic leg board assembly and the telescopic foot board assembly are in a retracted state, to implement upright sitting;
B. a lying-flat position: turning on the electric push rod to enable the slide to move toward the front end of the electric push rod, so that the slide drives the motor support to move toward the telescopic backrest assembly, the motor support drives the rotating linkage to rotate toward the telescopic backrest assembly, the rotating linkage drives the leg board transmission linkage to move forward, the leg board transmission linkage drives the first leg board linkage, the second leg board linkage, the third leg board linkage, and the fourth leg board linkage to extend, the third leg board linkage drives the first foot board linkage, the second foot board linkage, the third foot board linkage, the fourth foot board linkage, and the foot board support to extend, and when the rotating linkage rotates to that the limit protrusion is clamped with the limiting rivet, the limiting rivet limits the rotating linkage, the motor support is still, and the telescopic leg board assembly and the telescopic foot board assembly are in an extended state, to implement flat lying;
C. a leisure lying position: keeping the electric push rod on, so that because the rotating linkage is no longer rotatable and the motor support is locked, the slide drives the electric push rod to move toward the telescopic leg board assembly, the electric push rod drives the rotating rod to rotate toward the telescopic leg board assembly, the rotating rod drives the inclined linkage to move forward in the direction of the telescopic leg board assembly, the inclined linkage drives the inclined support to rotate, the caster at the front end of the inclined support is lowered, and the caster and the floor form support to enable the front end of the base to be higher than the rear end of the base, that is, the telescopic leg board assembly and the telescopic foot board assembly are higher than the telescopic backrest assembly, to implement the leisure lying position with the feet higher than the head;
D. restoration to the upright sitting position: turning on the electric push rod to enable the slide to be reset to the middle portion of the electric push rod, so that the electric push rod drives the rotating rod to rotate toward the telescopic backrest assembly, the rotating rod drives the inclined linkage to move toward the telescopic backrest assembly, the inclined linkage drives the inclined support to rotate to reset the inclined support, the caster at the front end of the inclined support is raised, the front end of the base is lowered, the base and the floor form support, after the inclined support rotates to that the inclined support side brace touches the limit block, the limit block limits the inclined support, the inclined support is still, the rotating rod stops rotating, and the electric push rod stops moving, the slide moves along the electric push rod toward the telescopic leg board assembly and drives the motor support to move toward the telescopic leg board assembly, the motor support drives the rotating linkage to rotate toward the telescopic leg board assembly, the rotating linkage drives the leg board transmission linkage to move backward, the leg board transmission linkage drives the first leg board linkage, the second leg board linkage, the third leg board linkage, and the fourth leg board linkage to retract, and the third leg board linkage drives the first foot board linkage, the second foot board linkage, the third foot board linkage, the fourth foot board linkage, and the foot board support to retract, to restore the upright sitting position; and
E. a stand-assisting position: turning on the electric push rod to enable the electric push rod to move toward the slide, so that the electric push rod drives the rotating rod to rotate toward the slide, the rotating rod drives the H-shaped support and the front end of the connecting bar to rise, and the rotating rod drives, through the rotating rod support, the front end of the inclined linkage to rise to raise the seat board assembly, to form the stand-assisting position.

The technical effects of the present invention are as follows: (1) In the iron frame for a dual-motor driven, stand-assisting recliner of the present invention, compared with the prior art, the inclined support is disposed, so that after the telescopic support is extended, the front end of the base can be raised through the fitting between the inclined linkage and the electric push rod, and after a user lies flat, the function of keeping the feet higher than the head can be implemented, thereby providing the iron frame with more varied functions. (2) The slide-type electric push rod is disposed, so that when the motor support is locked, the electric push rod can drive the rotating rod to rotate, thereby implementing the continuous operations of extending the telescopic support and raising the front end of the base, a simple structure, and easy operations. (3) The caster is disposed, so that the front end of the inclined support can be in slide fit with the floor, to reduce frictional resistance. (4) The rotating linkage has three connecting ends, so that only one electric push rod needs to be used to implement three operation modes, namely, a lying-flat position, a leisure lying position, and a stand-assisting position, so that the structure is simple, and varied functions are provided.

### BRIEF DESCRIPTION OF THE DRAWINGS

The present invention is further described below in detail with reference to the accompanying drawings in this specification:
FIG. 1 is a three-dimensional schematic structural diagram of an iron frame for a dual-motor driven, stand-assisting recliner according to the present invention;
FIG. 2 is a schematic structural exploded view of an iron frame for a dual-motor driven, stand-assisting recliner according to the present invention;
FIG. 3 is a three-dimensional schematic structural diagram of a telescopic support;
FIG. 4 is a schematic diagram of an assembly structure of an H-shaped support, a base, an inclined support, a motor support, a transmission mechanism, an inclined linkage, and a connecting bar;
FIG. 5 is a schematic diagram of an assembly structure of an H-shaped support, a motor, and an inclined linkage;
FIG. 6 is a schematic diagram of an assembly structure of a base, an inclined support, and a connecting bar;
FIG. 7 is a schematic structural diagram of an iron frame for a dual-motor driven, stand-assisting recliner in a leisure lying position state according to the present invention; FIG. 8 is a schematic structural diagram of an iron frame for a dual-motor driven, stand-assisting recliner in a sitting position state according to the present invention;
FIG. 9 is a schematic structural diagram of an iron frame for a dual-motor driven, stand-assisting recliner in a stand-assisting state according to the present invention;
FIG. 10 is a three-dimensional schematic structural diagram of an iron frame for a dual-motor driven, stand-assisting recliner according to the present invention;
FIG. 11 is a partial enlarged view of an area A in FIG. 10; and
FIG. 12 is a schematic structural diagram of a rotating linkage.

In the drawings:
motor support 1, motor support side brace 11, motor support cross brace 12, motor hinge support 13,
telescopic support 2, seat board front brace 2-1,
rotating linkage 2-2, first connecting end 2-2-1, second connecting end 2-2-2, third connecting end 2-2-3, rotating pin mounting hole 2-2-4, arc-shaped portion, 2-2-5, limit protrusion 2-2-6,
leg board transmission linkage 2-3, first leg board linkage 2-4, second leg board linkage 2-5, third leg board linkage 2-6, fourth leg board linkage 2-7, leg board front brace 2-8,
first foot board linkage 2-9, second foot board linkage 2-10, third foot board linkage 2-11, fourth foot board linkage 2-12, foot board support 2-13,
first backrest linkage 2-14, second backrest linkage 2-15, third backrest linkage 2-16, fourth backrest linkage 2-17, backrest cross brace 2-18,
limiting rivet 2-19, seat board vertical brace 2-20 seat board cross brace 2-21, seat board support 2-22,
leg board rotating pin 2-23, foot board rotating pin 2-24, rotating pin 2-25, limit column 2-26, backrest cross brace support 2-27,
connecting bar 3, H-shaped support 4, H-shaped support side brace 41, H-shaped support cross brace 42,
base 5, base side brace 51, base front brace 52, base rear brace 53, omnidirectional wheel 54, cushion block 55, base support 56, hinge support 57, limit block 58,
rotating rod 6, motor connection bracket 61, rotating rod support 62,
inclined linkage 7, inclined support 8, inclined support side brace 81, inclined support cross brace 82, caster 83, slide-type electric push rod 9, electric push rod 91, and slide 92.

### DETAILED DESCRIPTION

### Embodiment 1

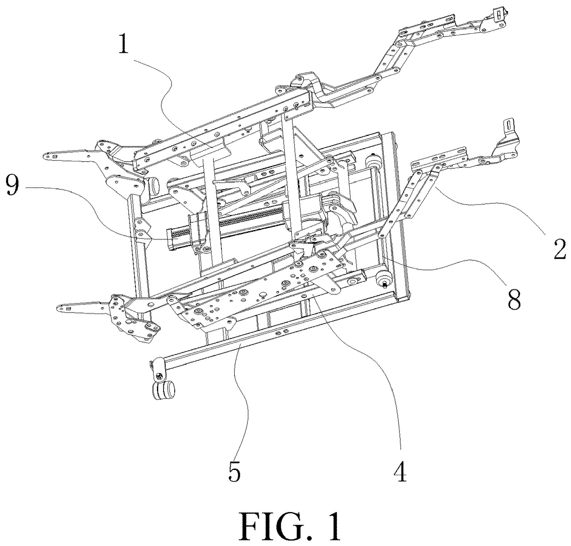

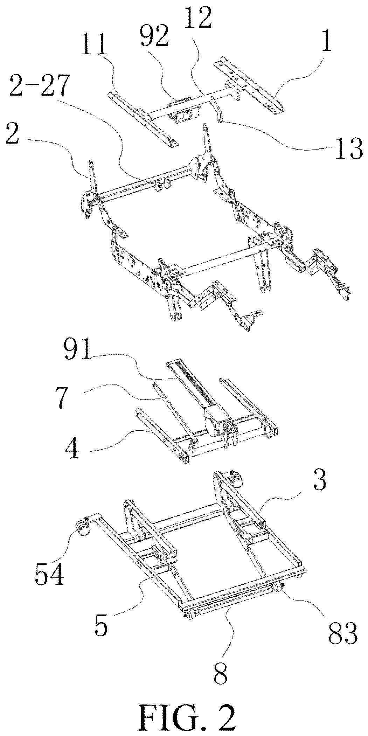

As shown in FIGS. 1 and 2, a telescopic driving mechanism used in an iron frame for a dual-motor driven, stand-assisting recliner in this embodiment is a slide-type electric push rod 9. The slide-type electric push rod 9 includes an electric push rod 91 and a slide 92 that are in transmission fit, and further includes a motor support 1 used for mounting the slide 92, a telescopic support 2 that may extend, an upper frame assembly, a rotatable inclined support 8 and a pair of inclined linkages 7, and a base 5 touching the floor during use. The upper frame assembly includes an H-shaped support 4 and a pair of connecting bars 3.

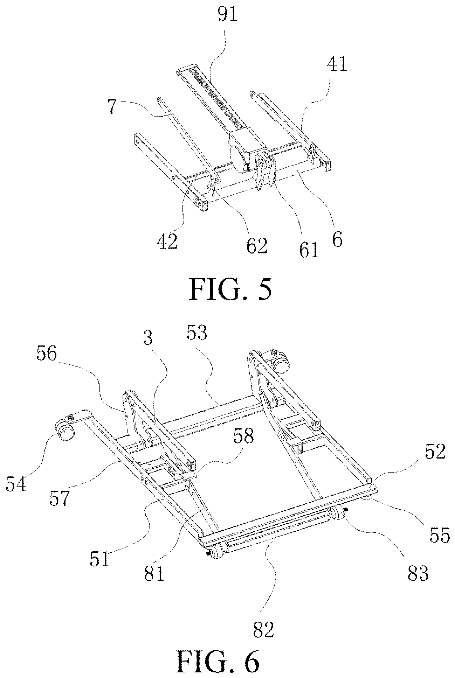

As shown in FIG. 6, the base 5 includes a base front brace 52, a base rear brace 53, and two base side braces 51 disposed on two sides. Two ends of the base front brace 52 are respectively fastened at front ends of the two base side braces 51 through welding, and two ends of the base rear brace 53 are fastened on rear portions of the two base side braces 51 through welding, to form a rectangular base framework. Bottoms of the two ends of the base front brace 52 are provided with cushion blocks 55, and tail ends of the two base side braces 51 are respectively provided with an omnidirectional wheel 54, so that the base 5 may touch the floor through the omnidirectional wheels 54 and the cushion blocks 55. Inner sides of the middle portions of the two base side braces 51 are provided with hinge supports 57. The two ends of the base rear brace 53 are respectively provided with a base support 56 extending upward.

As shown in FIG. 6, the inclined support 8 includes an inclined support cross brace 82 and two inclined support side braces 81 disposed on two sides of the inclined support cross brace 82. Two ends of the inclined support cross brace 82 are respectively fastened at front ends of the two inclined support side braces 81 through welding, to form the U-shaped inclined support 8. Tail ends of the two inclined support side braces 81 are disposed in a raised manner. Front ends of the two inclined support side braces 81 are respectively provided with a rotatable caster 83. Outer sides of middle portions the inclined support side braces 81 are respectively correspondingly hinged to the hinge supports 57. Limit blocks 58 are fixedly disposed at front ends of the hinge supports 57. Therefore, after the inclined support 8 rotates to a preset position, the limit blocks 58 may touch the inclined support side braces 81, to limit the rotation angle of the inclined support 8.

As shown in FIG. 5, the H-shaped support 4 includes an H-shaped support cross brace 42 and two H-shaped support side braces 41. Middle portions of the two H-shaped support side braces 41 are respectively fastened on two ends of the H-shaped support cross brace 42 through welding. The front end of the H-shaped support 4 is provided with a rotatable rotating rod 6, and two ends of the rotating rod 6 are respectively provided with a rotating rod support 62. One end of the inclined linkage 7 is correspondingly hinged to the rotating rod support 62, and the other end of the inclined linkage 7 is correspondingly hinged to the raised tail end of the inclined support side brace 81, so that the rotating rod 6 is capable of driving, when rotating, the inclined support 8 to rotate. A motor connection bracket 61 is fixedly disposed at the middle portion of the rotating rod 6, the tail end of the electric push rod 91 is correspondingly hinged to the motor connection bracket 61, and the front end of the electric push rod 91 is disposed toward the telescopic backrest assembly, so that the electric push rod 91 is capable of driving the rotating rod 6 to rotate.

As shown in FIG. 2, the motor support 1 includes a motor support cross brace 12 and two motor support side braces 11 fixedly disposed on two sides of the motor support cross brace 12. Two ends of the motor support cross brace 12 are respectively fastened on inner sides of middle portions of the two motor support side braces 11 through welding. The slide 92 of the slide-type electric push rod 9 is fixedly disposed at the middle portion of the motor support cross brace 12, and the slide 92 is in transmission fit with the electric push rod 91, so that the electric push rod 91 is capable of driving the motor support 1 to move.

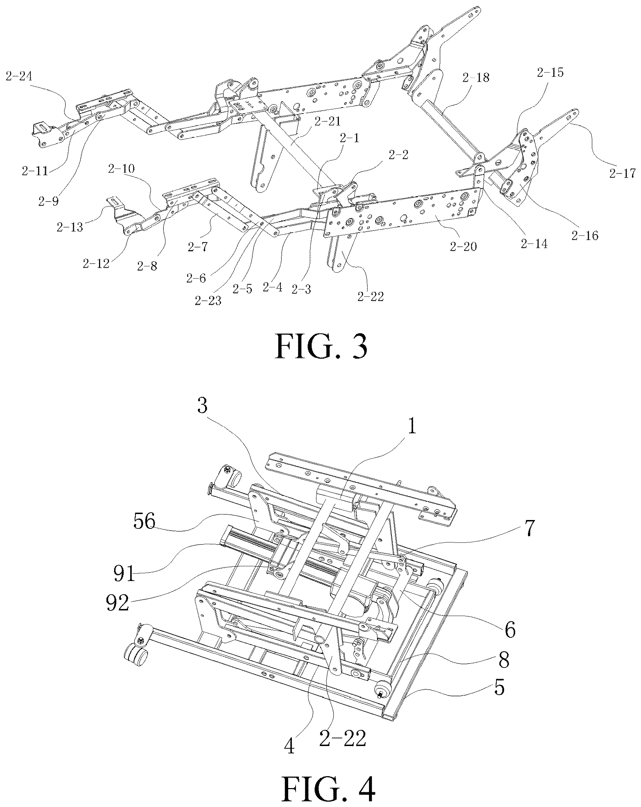

As shown in FIG. 3, the telescopic support 2 includes a seat board assembly, a telescopic leg board assembly, a telescopic foot board assembly, and a telescopic backrest assembly. Two sides of the tail end of the seat board assembly are respectively provided with a retractable telescopic backrest assembly. Two sides of the front end of the seat board assembly are respectively provided with a retractable telescopic leg board assembly. The front end of the telescopic leg board assembly is provided with a retractable telescopic foot board assembly. Tail ends on two sides of the motor support 1 are in transmission fit with the telescopic backrest assembly. Front ends on two sides of the motor support 1 are in transmission fit with the telescopic leg board assembly. Therefore, the motor support 1 is capable of driving, during movement, the telescopic backrest assembly and the telescopic leg board assembly to extend or retract.

Specifically, as shown in FIG. 3, the seat board assembly includes a seat board cross brace 2-21 and seat board vertical braces 2-20 disposed on two sides. Two ends of the seat board cross brace 2-21 are fastened on front portions of the two seat board vertical braces 2-20 through welding. Front ends of the two seat board vertical braces 2-20 are respectively downwardly and fixedly provided with a seat board support 2-22. Front portions of the two H-shaped support side braces 41 of the H-shaped support 4 are respectively correspondingly hinged to the bottom of the seat board supports 2-22. The top of each base support 56 is respectively correspondingly hinged to the top of the corresponding seat board support 2-22 by the connecting bar 3. That is, the front end of the connecting bar 3 is correspondingly hinged to the top of the seat board support 2-22, and the tail end of the connecting bar 3 is correspondingly hinged to the top of the base support 56, so that the seat board supports 2-22, the H-shaped support side brace 41, the base support 56, and the connecting bar 3 form a quadrilateral mechanism.

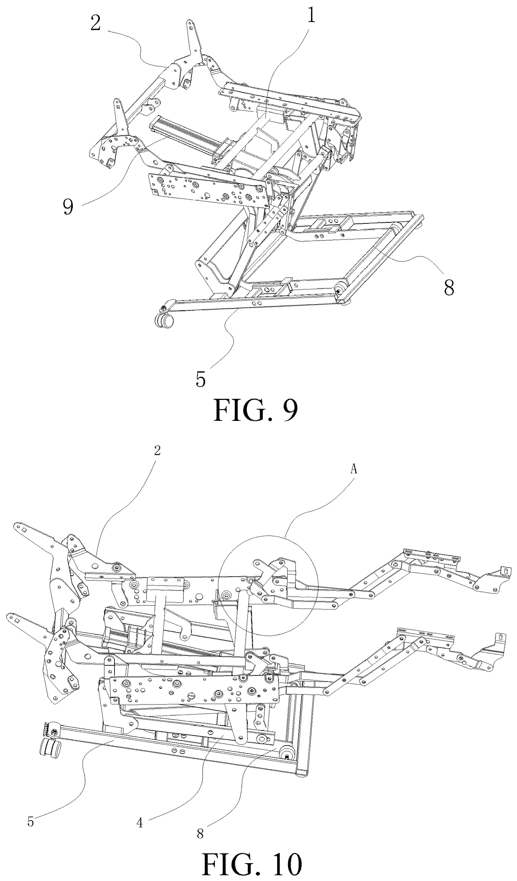

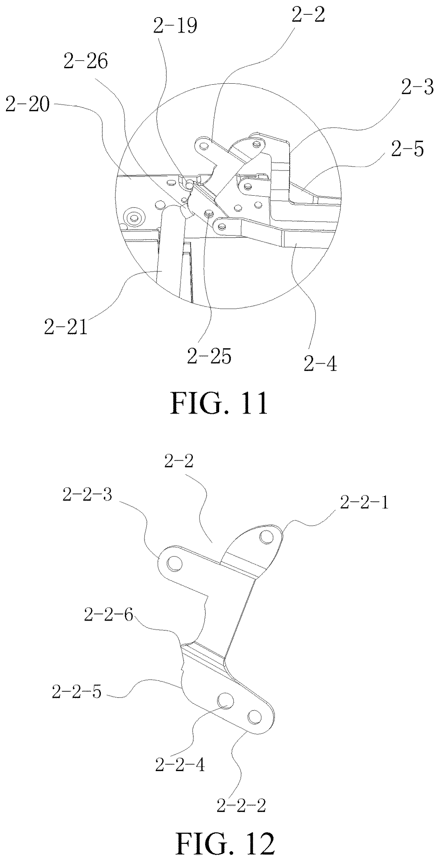

The front end of each motor support side brace 11 is fixedly provided with a seat board front brace 2-1. As shown in FIG. 10 to FIG. 12, the front end of each seat board vertical brace 2-20 is provided with a rotatable rotating linkage 2-2 in a hinged manner. The rotating linkage 2-2 includes a first connecting end 2-2-1, a second connecting end 2-2-2, and a third connecting end 2-2-3. The seat board front brace 2-1 is correspondingly hinged to the third connecting end 2-2-3 of the rotating linkage 2-2. The seat board vertical brace 2-20 is fixedly provided with a rotating pin 2-25. The middle portion of the second connecting end 2-2-2 is provided with a rotating pin mounting hole 2-2-4 fitting the rotating pin 2-25. Therefore, the rotating linkage 2-2 is rotatably disposed on the seat board vertical brace 2-20. The third connecting end 2-2-3 is correspondingly hinged to the seat board front brace 2-1, so that the front end of the motor support side brace 11 is in transmission fit with the rotating linkage 2-2. A limit protrusion 2-2-6 is provided between the second connecting end 2-2-2 and the third connecting end 2-2-3. A limiting rivet 2-19 is fixedly disposed on the seat board vertical brace 2-20. Therefore, the motor support 1 is capable of driving the rotating linkage 2-2 to rotate, and the limit protrusion 2-2-6 and the limiting rivet 2-19 fit with each other to limit the rotation angle of the rotating linkage 2-2.

As shown in FIG. 2, each telescopic leg board assembly includes a leg board transmission linkage 2-3, a leg board front brace 2-8, a first leg board linkage 2-4 and a second leg board linkage 2-5 that are disposed in parallel, and a third leg board linkage 2-6 and a fourth leg board linkage 2-7 that are disposed in parallel. The tail end of the second leg board linkage 2-5 is correspondingly hinged to the upper portion of the front end of the seat board vertical brace 2-20. The tail end of the first leg board linkage 2-4 is correspondingly hinged to the second connecting end 2-2-2 of the rotating linkage 2-2. The tail end of the third leg board linkage 2-6 is correspondingly hinged to the front end of the first leg board linkage 2-4. The front end of the third leg board linkage 2-6 is correspondingly hinged to the leg board front brace 2-8. The tail end of the fourth leg board linkage 2-7 is correspondingly hinged to the front end of the second leg board linkage 2-5. The front end of the fourth leg board linkage 2-7 is correspondingly hinged to the leg board front brace 2-8. The middle portion of the second leg board linkage 2-5 is provided with a leg board rotating pin 2-23. The middle portion of the third leg board linkage 2-6 is correspondingly hinged to the leg board rotating pin 2-23. The tail end of the leg board transmission linkage 2-3 is correspondingly hinged to the first connecting end 2-2-1 of the rotating linkage 2-2. The front end of the leg board transmission linkage 2-3 is correspondingly hinged to the leg board rotating pin 2-23. Therefore, the rotating linkage 2-2 is capable of driving the leg board transmission linkage 2-3 and the leg board rotating pin 2-23 to move, thereby implementing transformation and extension or retraction of the first leg board linkage 2-4, the second leg board linkage 2-5, the third leg board linkage 2-6, and the fourth leg board linkage 2-7.

Each telescopic foot board assembly includes a first foot board linkage 2-9, a second foot board linkage 2-10, a third foot board linkage 2-11, a fourth foot board linkage 2-12, and a foot board support 2-13. The tail end of the first foot board linkage 2-9 is correspondingly hinged to the middle portion of the third leg board linkage 2-6. The front end of the first foot board linkage 2-9 is correspondingly hinged to the tail end of the third foot board linkage 2-11. The front end of the third foot board linkage 2-11 is correspondingly hinged to the foot board support 2-13. The tail end of the second foot board linkage 2-10 is fixedly connected to the leg board front brace 2-8. The front end of the second foot board linkage 2-10 is correspondingly hinged to the tail end of the fourth foot board linkage 2-12. The front end of the fourth foot board linkage 2-12 is correspondingly hinged to the foot board support 2-13. The middle portion of the second foot board linkage 2-10 is provided with a foot board rotating pin 2-24. The middle portion of the third foot board linkage 2-11 is correspondingly hinged to the foot board rotating pin 2-24. Therefore, the third leg board linkage 2-6 is capable of driving the first foot board linkage 2-9, the third foot board linkage 2-11, and the foot board support 2-13 to move.

The telescopic backrest assembly includes a first backrest linkage 2-14, a second backrest linkage 2-15, a third backrest linkage 2-16, and a fourth backrest linkage 2-17. The bottom of the first backrest linkage 2-14 is correspondingly hinged to the bottom of the tail end of the seat board vertical brace 2-20. The top of the first backrest linkage 2-14 is correspondingly hinged to the front end of the second backrest linkage 2-15. The upper portion of the tail end of the second backrest linkage 2-15 is correspondingly hinged to the top of the third backrest linkage 2-16. The second backrest linkage 2-15 is fixedly connected to the tail end of the motor support side brace 11. The bottom of the third backrest linkage 2-16 is fixedly connected to the fourth backrest linkage 2-17. Therefore, the motor support 1 is capable of driving, during movement, the first backrest linkage 2-14, the second backrest linkage 2-15, the third backrest linkage 2-16, and the fourth backrest linkage 2-17 to move.

As shown in FIG. 4, the slide 92 is disposed at the middle portion of the electric push rod 91 during assembly. In this case, the front end of the inclined support 8 is disposed not protruding from the base 5. During use, the electric push rod 91 is turned on to enable the slide 92 to drive, when moving toward the front end of the electric push rod 91, the motor support 1 to move toward the telescopic backrest assembly. The motor support 1 drives the telescopic leg board assembly and the telescopic foot board assembly to extend. After the motor support 1 moves to a preset position, the telescopic leg board assembly and the telescopic foot board assembly completely extend, and the motor support 1 no longer moves. The electric push rod 91 is kept on to enable the electric push rod 91 to move relative to the slide 92. That is, the electric push rod 91 moves toward the telescopic leg board assembly, and drives the rotating rod 6 to rotate in the forward direction. The rotating rod 6 drives the inclined linkage 7 to move forward. The inclined linkage 7 drives the inclined support 8 to rotate. The inclined support 8 is supported on the floor. Therefore, the front end of the base 5 is higher than the rear end of the base 5. That is, the telescopic leg board assembly and the telescopic foot board assembly are higher than the telescopic backrest assembly, thereby implementing the function of keeping the feet higher than the head.

Preferably, an arc-shaped portion 2-2-5 is disposed between the limit protrusion 2-2-6 and the second connecting end 2-2-2 of the rotating linkage, and the seat board cross brace 2-21 is provided with a limit column 2-26. When the rotating linkage 2-2 rotates, rotational friction is generated between the arc-shaped portion 2-2-5 and the limit column 2-26, to control the rotation angle of the rotating linkage 2-2, thereby limiting the rotation of the rotating linkage 2-2.

To ensure the extension effect of the telescopic backrest assembly, the motor support cross brace 12 is further provided with a motor hinge support 13. A backrest cross brace 2-18 is fixedly disposed between two fourth backrest linkages 2-17. A backrest cross brace support 2-27 is disposed at the middle portion of the backrest cross brace 2-18. A retractable second driving mechanism (not shown in the drawings) is disposed between the motor hinge support 13 and the backrest cross brace support 2-27 and is configured to independently drive the extension or retraction of the telescopic backrest assembly, to ensure the efficiency of extension or retraction of the telescopic backrest assembly thereby implementing dual-motor drive.

### Embodiment 2

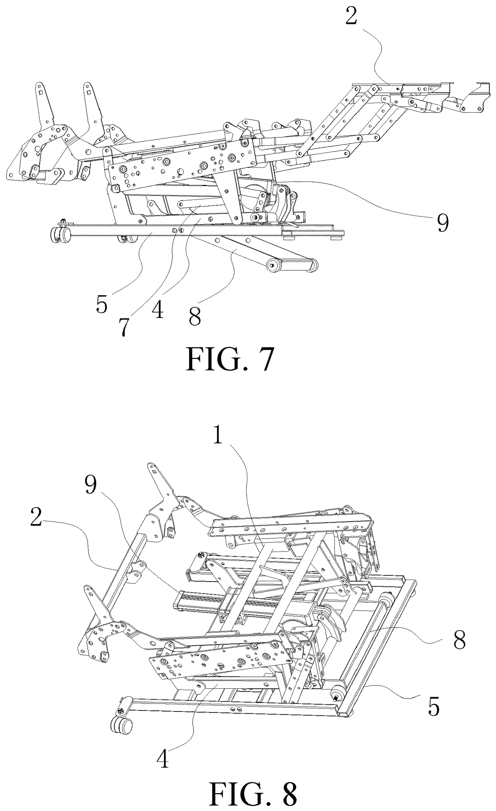

An operating method for the foregoing iron frame for a dual-motor driven, stand-assisting recliner includes the following steps:
A. an upright sitting position: placing the slide 92 at the middle portion of the electric push rod 91, so that the front end of the inclined support 8 is flush with the bottom of the base 5, the base 5 and the seat board assembly are in a horizontal state, and the telescopic leg board assembly and the telescopic foot board assembly are in a retracted state, to implement upright sitting, as shown in FIG. 8;
B. a lying-flat position: turning on the electric push rod 91 to enable the slide 92 to move toward the front end of the electric push rod 91, so that the slide 92 drives the motor support 1 to move toward the telescopic backrest assembly, the motor support 1 drives the rotating linkage 2-2 to rotate toward the telescopic backrest assembly, the rotating linkage 2-2 drives the leg board transmission linkage 2-3 to move forward, the leg board transmission linkage 2 drives the first leg board linkage 2-4, the second leg board linkage 2-5, the third leg board linkage 2-6, and the fourth leg board linkage 2-7 to extend, the third leg board linkage 2-6 drives the first foot board linkage 2-9, the second foot board linkage 2-10, the third foot board linkage 2-11, the fourth foot board linkage 2-12, and the foot board support 2-13 to extend, when the rotating linkage 2-2 rotates to that the limit protrusion 2-2-6 is clamped with the limiting rivet 2-19, the limiting rivet 2-19 limits the rotating linkage 2-2, the motor support 1 is still, and the telescopic leg board assembly and the telescopic foot board assembly are in an extended state, to implement flat lying, as shown in FIG. 1;
C. a leisure lying position: keeping the electric push rod 91 on, so that because the rotating linkage 2-2 is no longer rotatable and the motor support 1 is locked, the slide 92 drives the electric push rod 91 to move toward the telescopic leg board assembly, the electric push rod 91 drives the rotating rod 6 to rotate toward the telescopic leg board assembly, the rotating rod 6 drives the inclined linkage 7 to move forward in the direction of the telescopic leg board assembly, the inclined linkage 7 drives the inclined support 8 to rotate, the caster 83 at the front end of the inclined support 8 is lowered, and the caster 83 and the floor form support to enable the front end of the base 5 to be higher than the rear end of the base 5, that is, the telescopic leg board assembly and the telescopic foot board assembly are higher than the telescopic backrest assembly, to implement the leisure lying position with the feet higher than the head, as shown in FIG. 7;
D. restoration to the upright sitting position: turning on the electric push rod 91 to enable the slide 92 to be reset to the middle portion of the electric push rod 91, so that the electric push rod 91 drives the rotating rod 6 to rotate toward the telescopic backrest assembly, the rotating rod 6 drives the inclined linkage 7 to move toward the telescopic backrest assembly, the inclined linkage 7 drives the inclined support 8 to rotate to reset the inclined support, the caster at the front end of the inclined support 8 is raised, the front end of the base 5 is lowered, the base 5 and the floor form support, after the inclined support 8 rotates to that the inclined support side brace 81 touches the limit block 58, the limit block 58 limits the inclined support 8, the inclined support 8 is still, the rotating rod 6 stops rotating, and the electric push rod 91 stops moving, the slide 92 moves along the electric push rod 91 toward the telescopic leg board assembly and drives the motor support 1 to move toward the telescopic leg board assembly, the motor support 1 drives the rotating linkage 2-2 to rotate toward the telescopic leg board assembly, the rotating linkage 2-2 drives the leg board transmission linkage 2-3 to move backward, the leg board transmission linkage 2-3 drives the first leg board linkage 2-4, the second leg board linkage 2-5, the third leg board linkage 2-6, and the fourth leg board linkage 2-7 to retract, and the third leg board linkage 2-6 drives the first foot board linkage 2-9, the second foot board linkage 2-10, the third foot board linkage 2-11, the fourth foot board linkage 2-12, and the foot board support 2-13 to retract, to restore the upright sitting position; and
E. a stand-assisting position: turning on the electric push rod 91 to enable the electric push rod 91 to move toward the slide 92, so that the electric push rod 91 drives the rotating rod 6 to rotate toward the slide 92, the rotating rod 6 drives the H-shaped support 4 and the front end of the connecting bar 3 to rise, and the rotating rod 6 drives, through the rotating rod support 62, the front end of the inclined linkage 7 to rise to raise the seat board assembly, to form the stand-assisting position, as shown in FIG. 9.

Apparently, the foregoing embodiments are merely examples used for clearly describing the present invention, but are not intended to limit the implementations of the present invention. A person of ordinary skill in the art may further make variations or changes of other different forms based on the foregoing descriptions.

## Claims

1. An iron frame for a dual-motor driven, stand-assisting recliner, comprising a telescopic driving mechanism, a telescopic support (2), and a base (5),
wherein telescopic means capable to extend and retract,
and further comprising a motor support (1), an inclined support (8), an upper frame assembly, and an inclined linkage (7), wherein middle portions of two sides of the inclined support (8) are correspondingly hinged to middle portions of two sides of the base (5), and the tail end of the inclined support (8) is disposed in a raised manner; the front end of the upper frame assembly is provided with a rotatable rotating rod (6), two ends of the rotating rod (6) are respectively provided with a rotating rod support (62), one end of the inclined linkage (7) is correspondingly hinged to the rotating rod support (62), and the other end of the inclined linkage (7) is correspondingly hinged to the tail end of the inclined support (8), so that the rotating rod (6) is capable of driving, during rotation, the inclined support (8) to move; and the motor support (1) is disposed above the upper frame assembly, the tail end of the telescopic driving mechanism is correspondingly hinged to the rotating rod (6), the front end of the telescopic driving mechanism is in transmission fit with the motor support (1), and two ends of the motor support (1) are respectively in transmission fit with the telescopic support (2), so that the telescopic driving mechanism is capable of driving, during extension or retraction, the motor support (1) and the upper frame assembly to move, and the motor support (1) drives the telescopic support (2) to extend or retract
wherein the telescopic support (2) comprises a seat board assembly, a telescopic leg board assembly, a telescopic foot board assembly, and a telescopic backrest assembly, two sides of the tail end of the seat board assembly are respectively provided with a retractable telescopic backrest assembly, two sides of the front end of the seat board assembly are respectively provided with a retractable telescopic leg board assembly, and the front end of the telescopic leg board assembly is provided with a retractable telescopic foot board assembly; and tail ends on two sides of the motor support (1) are in transmission fit with the telescopic backrest assemblies, and front ends on two sides of the motor support (1) are in transmission fit with the telescopic leg board assemblies, so that the motor support (1) is capable of driving, during movement, the telescopic backrest assemblies and the telescopic leg board assemblies to extend or retract,
wherein the upper frame assembly comprises an H-shaped support (4) and a connecting bar (3), two sides of the front end of the seat board assembly are downwardly provided with seat board supports, the bottom of the seat board support is correspondingly hinged to the front portion of the H-shaped support (4), tail ends on two sides of the base are upwardly provided with base supports, tail ends on two sides of the H-shaped support (4) are correspondingly hinged to bottoms of the base supports (56), the front end of the connecting bar (3) is correspondingly hinged to a middle portion of the seat board support (2-22), and the tail end of the connecting bar (3) is correspondingly hinged to the top of the base support (56); the telescopic driving mechanism includes a slide-type electric push rod (91), the slide-type electric push rod comprises an electric push rod (91) and a slide (92) that are in transmission fit, the tail end of the electric push rod (91) is correspondingly hinged to the middle portion of the rotating rod (6), the front end of the electric push rod (91) is disposed toward the telescopic backrest assembly, and the slide (92) is fixedly disposed on the motor support (1); and the slide (92) is disposed at the middle portion of the electric push rod (91) during assembly,
wherein the seat board assembly further comprises a seat board cross brace (2-21) and seat board vertical braces (2-20) disposed on two sides, the seat board support (2-22) is fixedly disposed on the lower side of the front portion of the seat board vertical brace (2-20), and the front end of each seat board vertical brace (2-20) is provided with a rotating linkage (2-2) in a hinged manner, the rotating linkage (2-2) comprises a first connecting end (2-2-1), a second connecting end (2-2-2), and a third connecting end (2-2-3), the middle portion of the second connecting end is correspondingly hinged to the seat board vertical brace (2-20), the third connecting end (2-2-3) is in transmission fit with the front end of the motor support (1), a limit protrusion (2-2-6) is provided between the second connecting end (2-2-2) and the third connecting end (2-2-3), and the seat board vertical brace (2-20) is fixedly provided with a limiting rivet (2-19), so that the motor support (1) is capable of driving the rotating linkage (2-2) to rotate, and the limit protrusion (2-2-6) and the limiting rivet (2-19) fit with each other to limit the rotation angle of the rotating linkage (2-2),
wherein the motor support (1) comprises a motor support cross brace (12) and motor support side braces (11) fixedly disposed on two sides of the motor support cross brace (12), the front end of the motor support side brace (11) is fixedly provided with a seat board front brace (2-1), the seat board front brace (2-1) is correspondingly hinged to the third connecting end (2-2-3) of the rotating linkage (2-2), and the slide (92) is fixedly disposed at the middle portion of the motor support cross brace(12),
wherein the telescopic leg board assembly comprises a leg board transmission linkage (2-3), a leg board front brace (2-8), a first leg board linkage (2-4)and a second leg board linkage (2-5) that are disposed in parallel, and a third leg board linkage (2-6) and a fourth leg board linkage (2-7) that are disposed in parallel, the tail end of the first leg board linkage (2-4) is correspondingly hinged to the second connecting end (2-2-2) of the rotating linkage (2-2), the tail end of the second leg board linkage (2-2-2) is correspondingly hinged to the upper portion of the front end of the seat board vertical brace (2-20), the tail end of the third leg board linkage (2-6) is correspondingly hinged to the front end of the first leg board linkage (2-4), the front end of the third leg board linkage (2-6) is correspondingly hinged to the leg board front brace (2-8), the tail end of the fourth leg board linkage (2-7) is correspondingly hinged to the front end of the second leg board linkage (2-5), the front end of the fourth leg board linkage (2-7) is correspondingly hinged to the leg board front brace (2-8), the middle portion of the second leg board linkage (2-5) is provided with a leg board rotating pin (2-23), the middle portion of the third leg board linkage (2-6) is correspondingly hinged to the leg board rotating pin (2-23), the tail end of the leg board transmission linkage (2-3) is correspondingly hinged to the first connecting end (2-2-1) of the rotating linkage (2-2), and the front end of the leg board transmission linkage (2-3) is correspondingly hinged to the leg board rotating pin (2-23), so that the rotating linkage (2-2) is capable of driving the leg board transmission linkage (2-3) and the leg board rotating pin (2-23) to move;
the telescopic foot board assembly comprises a first foot board linkage (2-9), a second foot board linkage (2-10), a third foot board linkage (2-11), a fourth foot board linkage (2-12), and a foot board support (2-13), the tail end of the first foot board linkage (2-9) is correspondingly hinged to the middle portion of the third leg board linkage (2-6), the front end of the first foot board linkage (2-9) is correspondingly hinged to the tail end of the third foot board linkage (2-11), the front end of the third foot board linkage (2-11) is correspondingly hinged to the foot board support (2-13), the tail end of the second foot board linkage (2-10) is fixedly connected to the leg board front brace (2-8), the front end of the second foot board linkage (2-10)is correspondingly hinged to the tail end of the fourth foot board linkage (2-12), the front end of the fourth foot board linkage (2-12) is correspondingly hinged to the foot board support (2-13), the middle portion of the second foot board linkage (2-10) is provided with a foot board rotating pin (2-24), and the middle portion of the third foot board linkage (2-11) is correspondingly hinged to the foot board rotating pin (2-24), so that the third leg board linkage (2-6) is capable of driving the first foot board linkage (2-9), the third foot board linkage (2-11), and the foot board support (2-13) to move; and
the telescopic backrest assembly comprises a first backrest linkage (2-14), a second backrest linkage (2-15), a third backrest linkage (2-16), and a fourth backrest linkage (2-17), the bottom of the first backrest linkage (2-14) is correspondingly hinged to the seat board vertical brace (2-20), the top of the first backrest linkage (2-14) is correspondingly hinged to the front end of the second backrest linkage (2-15), the upper portion of the tail end of the second backrest linkage (2-15) is correspondingly hinged to the top of the third backrest linkage (2-16), the second backrest linkage (2-15) is fixedly connected to the tail end of the motor support side brace (11), and the bottom of the third backrest linkage (2-16) is fixedly connected to the fourth backrest linkage (2-17), so that the motor support (1) is capable of driving, during movement, the first backrest linkage (2-14), the second backrest linkage (2-15), the third backrest linkage (2-16), and the fourth backrest linkage (2-17) to move.

2. The iron frame for a dual-motor driven, stand-assisting recliner according to claim 1, wherein the base (5) comprises a base front brace (52), a base rear brace (53), and base side braces (51) disposed on two sides, and the inner side of the base side brace (51) is provided with a hinge support (57); and the inclined support (8) comprises an inclined support cross brace (82) and inclined support side braces (81) disposed on two sides of the inclined support cross brace (82), the front end of the inclined support side brace (81) is provided with a rotatable caster (83), the middle portion of the inclined support side brace (81) is correspondingly hinged to the hinge support (57) , and the front end of the hinge support (57) is fixedly provided with a limit block (58),

3. The iron frame for a dual-motor driven, stand-assisting recliner according to claim 2,
wherein a motor connection bracket (61) is fixedly disposed at the middle portion of the rotating rod (6), and the tail end of the electric push rod (91) is correspondingly hinged to the motor connection bracket (61).

4. An operating method for the iron frame for a dual-motor driven, stand-assisting recliner according to claim 1, comprising the following steps:
A. moving to an upright sitting position: placing the slide (92) at the middle portion of the electric push rod (91), so that the front end of the inclined support (8) is flush with the bottom of the base (5), the base (5) and the seat board assembly are in a horizontal state, and the telescopic leg board assembly and the telescopic foot board assembly are in a retracted state, to implement upright sitting;
B. moving to a lying-flat position: turning on the electric push rod (91) to enable the slide (92) to move toward the front end of the electric push rod (91), so that the slide (92) drives the motor support (1) to move toward the telescopic backrest assembly, the motor support (1) drives the rotating linkage (2-2) to rotate toward the telescopic backrest assembly, the rotating linkage (2-2) drives the leg board transmission linkage (2-3) to move forward, the leg board transmission linkage (2-3) drives the first leg board linkage (2-4), the second leg board linkage (2-5), the third leg board linkage (2-6), and the fourth leg board linkage (2-7) to extend, the third leg board linkage (2-6) drives the first foot board linkage (2-9), the second foot board linkage (2-10), the third foot board linkage (2-11), the fourth foot board linkage (2-12), and the foot board support (2-13) to extend, when the rotating linkage (2-2) rotates to that the limit protrusion (2-2-6) is clamped with the limiting rivet (2-19), the limiting rivet (2-19) limits the rotating linkage (2-2), the motor support (1) is still, and the telescopic leg board assembly and the telescopic foot board assembly are in an extended state, to implement flat lying;
C. moving to a leisure lying position: keeping the electric push rod (91) on, so that because the rotating linkage (2-2) is no longer rotatable and the motor support (1) is locked, the slide (92) drives the electric push rod (91) to move toward the telescopic leg board assembly, the electric push rod (91) drives the rotating rod (6) to rotate toward the telescopic leg board assembly, the rotating rod (6) drives the inclined linkage (7) to move forward in the direction of the telescopic leg board assembly, the inclined linkage (7) drives the inclined support (8) to rotate, the caster (83) at the front end of the inclined support (8) is lowered, and the caster (83) and the floor form support to enable the front end of the base (5) to be higher than the rear end of the base (5), that is, the telescopic leg board assembly and the telescopic foot board assembly are higher than the telescopic backrest assembly, to implement the leisure lying position with the feet higher than the head;
D. restoring to the upright sitting position: turning on the electric push rod (91) to enable the slide (92) to be reset to the middle portion of the electric push rod (91), so that the electric push rod (91) drives the rotating rod (6) to rotate toward the telescopic backrest assembly, the rotating rod (6) drives the inclined linkage (7) to move toward the telescopic backrest assembly, the inclined linkage (7) drives the inclined support (8) to rotate to reset the inclined support (8), the caster (83) at the front end of the inclined support (8) is raised, the front end of the base (5) is lowered, the base (5) and the floor form support, after the inclined support (8) rotates to that the inclined support side brace (81) touches the limit block (58), the limit block (58) limits the inclined support (8), the inclined support (8) is still, the rotating rod (6) stops rotating, and the electric push rod (91) stops moving, the slide (92) moves along the electric push rod (91) toward the telescopic leg board assembly and drives the motor support (1) to move toward the telescopic leg board assembly, the motor support (1) drives the rotating linkage (2-2) to rotate toward the telescopic leg board assembly, the rotating linkage (2-2) drives the leg board transmission linkage to move backward, the leg board transmission linkage (2-3) drives the first leg board linkage (2-4), the second leg board linkage (2-5), the third leg board linkage (2-6), and the fourth leg board linkage (2-7) to retract, and the third leg board linkage (2-6) drives the first foot board linkage (2-9), the second foot board linkage (2-10), the third foot board linkage (2-11), the fourth foot board linkage (2-12), and the foot board support (2-13) to retract, to restore the upright sitting position; and
E. moving to a stand-assisting position: turning on the electric push rod (91) to enable the electric push rod (91) to move toward the slide (92), so that the electric push rod (91) drives the rotating rod (6) to rotate toward the slide (92), the rotating rod (6) drives the H-shaped support (4) and the front end of the connecting bar (3) to rise, and the rotating rod (6) drives, through the rotating rod support (62), the front end of the inclined linkage (7) to rise to raise the seat board assembly, to form the stand-assisting position.

## Patentansprüche

1. Eisenrahmen für eine zweimotorig angetriebene Stehhilfe-Liege, umfassend einen teleskopischen Antriebsmechanismus, eine Teleskopstütze (2) und eine Basis (5),
wobei teleskopisch bedeutet, in der Lage zu sein, aus- und einzufahren,
und ferner umfassend eine Motorstütze (1), eine geneigte Stütze (8), eine obere Rahmenanordnung und eine geneigte Verbindung (7), wobei mittlere Abschnitte von zwei Seiten der geneigten Stütze (8) entsprechend an mittleren Abschnitten von zwei Seiten der Basis (5) angelenkt sind und das hintere Ende der geneigten Stütze (8) auf eine erhöhte Weise angeordnet ist; das vordere Ende der oberen Rahmenanordnung mit einer drehbaren Drehstange (6) bereitgestellt ist, zwei Enden der Drehstange (6) jeweils mit einer Drehstangenstütze (62) versehen sind, ein Ende der geneigten Verbindung (7) entsprechend an der Drehstangenstütze (62) angelenkt ist und das andere Ende der geneigten Verbindung (7) entsprechend an dem hinteren Ende der geneigten Stütze (8) angelenkt ist, so dass die Drehstange (6) in der Lage ist, während einer Drehung die geneigte Stütze (8) zu bewegen; und die Motorstütze (1) oberhalb der oberen Rahmenanordnung angeordnet ist, das hintere Ende des teleskopischen Antriebsmechanismus entsprechend an der Drehstange (6) angelenkt ist, das vordere Ende des teleskopischen Antriebsmechanismus in Transmissionspassung mit der Motorstütze (1) ist, das vordere Ende des teleskopischen Antriebsmechanismus mit der Motorstütze (1) in Transmissionspassung ist und zwei Enden der Motorstütze (1) jeweils in Transmissionspassung mit der Teleskopstütze (2) sind, so dass der teleskopische Antriebsmechanismus in der Lage ist, während des Ausfahrens oder Einfahrens die Motorstütze (1) und die obere Rahmenanordnung zu bewegen, und die Motorstütze (1) die Teleskopstütze (2) zum Ausfahren oder Einfahren antreibt,
wobei die Teleskopstütze (2) eine Sitzbrettanordnung, eine teleskopische Beinbrettanordnung, eine teleskopische Fußbrettanordnung und eine teleskopische Rückenlehnenanordnung umfasst, wobei zwei Seiten des hinteren Endes der Sitzbrettanordnung jeweils mit einer einziehbaren teleskopischen Rückenlehnenanordnung bereitgestellt sind, wobei zwei Seiten des vorderen Endes der Sitzbrettanordnung jeweils mit einer einziehbaren teleskopischen Beinbrettanordnung bereitgestellt sind, und wobei das vordere Ende der teleskopischen Beinbrettanordnung mit einer einziehbaren teleskopischen Fußbrettanordnung bereitgestellt ist; und hintere Enden auf zwei Seiten der Motorstütze (1) in Transmissionspassung mit den teleskopischen Rückenlehnenanordnungen sind, und vordere Enden auf zwei Seiten der Motorstütze (1) in Transmissionspassung mit den teleskopischen Beinbrettanordnungen sind, so dass die Motorstütze (1) in der Lage ist, während der Bewegung die teleskopischen Rückenlehnenanordnungen und die teleskopischen Beinbrettanordnungen anzutreiben, um auszufahren oder einzufahren,
wobei die obere Rahmenanordnung eine H-förmige Stütze (4) und eine Verbindungsstange (3) umfasst, zwei Seiten des vorderen Endes der Sitzbrettanordnung nach unten mit Sitzbretthalterungen bereitgestellt sind, der Boden der Sitzbretthalterung entsprechend am vorderen Abschnitt der H-förmigen Stütze (4) angelenkt ist, hintere Enden an zwei Seiten der Basis nach oben mit Basishalterungen bereitgestellt sind, die hinteren Enden auf zwei Seiten der H-förmigen Stütze (4) entsprechend an den Unterseiten der Basisstützen (56) angelenkt sind, das vordere Ende der Verbindungsstange (3) entsprechend an einem mittleren Abschnitt der Sitzbrettstütze (2-22) angelenkt ist und das hintere Ende der Verbindungsstange (3) entsprechend an der Oberseite der Basisstütze (56) angelenkt ist; der teleskopische Antriebsmechanismus eine elektrische Schubstange (91) vom Schiebetyp umfasst, die elektrische Schubstange vom Schiebetyp eine elektrische Schubstange (91) und einen Schlitten (92) umfasst, die in Transmissionspassung sind, das hintere Ende der elektrischen Schubstange (91) entsprechend an dem mittleren Abschnitt der Drehstange (6) angelenkt ist, das vordere Ende der elektrischen Schubstange (91) in Richtung der teleskopischen Rückenlehnenanordnung angeordnet ist, und der Schlitten (92) fest an der Motorstütze (1) angeordnet ist; und der Schlitten (92) während der Montage am mittleren Abschnitt der elektrischen Schubstange (91) angeordnet ist.,
wobei die Sitzbrettanordnung ferner eine Sitzbrett-Querstrebe (2-21) und Sitzbrett-Vertikalstreben (2-20) umfasst, die an zwei Seiten angeordnet sind, wobei die Sitzbrettstütze (2-22) fest an der unteren Seite des vorderen Abschnitts der Sitzbrett-Vertikalstrebe (2-20) angeordnet ist, und das vordere Ende jeder Sitzbrett-Vertikalstrebe (2-20) mit einer Drehverbindung (2-2) in einer gelenkigen Weise bereitgestellt ist, wobei die Drehverbindung (2-2) ein erstes Verbindungsende (2-2-1), ein zweites Verbindungsende (2-2-2) und ein drittes Verbindungsende (2-2-3) umfasst, wobei der mittlere Abschnitt des zweiten Verbindungsendes entsprechend an der Sitzbrett-Vertikalstrebe (2-20) angelenkt ist, das dritte Verbindungsende (2-2-3) in Transmissionspassung mit dem vorderen Ende der Motorstütze (1) ist, ein Begrenzungsvorsprung (2-2-6) zwischen dem zweiten Verbindungsende (2-2-2) und dem dritten Verbindungsende (2-2-3) bereitgestellt ist, und die vertikale Sitzbrettstrebe (2-20) fest mit einem Begrenzungsniet (2-19) versehen ist, so dass die Motorstütze (1) in der Lage ist, die Drehverbindung (2-2) zur Drehung anzutreiben, und der Begrenzungsvorsprung (2-2-6) und der Begrenzungsniet (2-19) zueinander passen, um den Drehwinkel der Drehverbindung (2-2) zu begrenzen,
wobei die Motorstütze (1) eine Motorstütze-Querstrebe (12) und Motorstütze-Seitenstreben (11) umfasst, die fest an zwei Seiten der Motorstütze-Querstrebe (12) angeordnet sind, wobei das vordere Ende der Motorstütze-Seitenstrebe (11) fest mit einer Sitzbrett-Vorderstrebe (2-1) bereitgestellt ist, wobei die Sitzbrett-Vorderstrebe (2-1) entsprechend an dem dritten Verbindungsende (2-2-3) der Drehverbindung (2-2) angelenkt ist, und wobei der Schlitten (92) fest an dem mittleren Abschnitt die Motorstütze-Querstrebe (12 ) angeordnet ist,
wobei die teleskopische Beinbrettanordnung eine Beinbretttransmissionsverbindung (2-3), eine vordere Beinbrettstrebe (2-8), eine erste Beinbrettverbindung (2-4) und eine zweite Beinbrettverbindung (2-5), die parallel angeordnet sind, und eine dritte Beinbrettverbindung (2-6) und eine vierte Beinbrettverbindung (2-7), die parallel angeordnet sind, umfasst, wobei das hintere Ende der ersten Beinbrettverbindung (2-4) entsprechend an dem zweiten Verbindungsende (2-2-2) der Drehverbindung (2-2) angelenkt ist, das hintere Ende der zweiten Beinbrettverbindung (2-2-2) entsprechend an dem oberen Teil des vorderen Endes der vertikalen Sitzbrettstrebe (2-20) angelenkt ist, das hintere Ende der dritten Beinbrettverbindung (2-6) entsprechend an dem vorderen Ende der ersten Beinbrettverbindung (2-4) angelenkt ist, das vordere Ende der dritten Beinbrettverbindung (2-6) entsprechend an der vorderen Beinbrettstrebe (2-8) angelenkt ist, das hintere Ende der vierten Beinbrettverbindung (2-7) entsprechend am vorderen Ende der zweiten Beinbrettverbindung (2-5) angelenkt ist, das vordere Ende der vierten Beinbrettverbindung (2-7) entsprechend an der vorderen Beinbrettstrebe (2-8) angelenkt ist, der mittlere Abschnitt der zweiten Beinbrettverbindung (2-5) mit einem Beinbrettdrehstift (2-23) bereitgestellt ist, der mittlere Abschnitt der dritten Beinbrettverbindung (2-6) entsprechend an dem Beinbrettdrehstift (2-23) angelenkt ist, das hintere Ende der Beinbretttransmissionsverbindung (2-3) entsprechend an dem ersten Verbindungsende (2-2-1) der Drehverbindung (2-2) angelenkt ist, und das vordere Ende der Beinbretttransmissionsverbindung (2-3) entsprechend an dem Beinbrettdrehstift (2-23) angelenkt ist, so dass die Drehverbindung (2-2) in der Lage ist, die Beinbretttransmissionsverbindung (2-3) und den Beinbrett-Drehstift (2-23) zu bewegen;
die teleskopische Fußbrettanordnung eine erste Fußbrettverbindung (2-9), eine zweite Fußbrettverbindung (2-10), eine dritte Fußbrettverbindung (2-11), eine vierte Fußbrettverbindung (2-12) und eine Fußbrettstütze (2-13) umfasst, wobei das hintere Ende der ersten Fußbrettverbindung (2-9) entsprechend an dem mittleren Abschnitt der dritten Fußbrettverbindung (2-6) angelenkt ist, das vordere Ende der ersten Fußbrettverbindung (2-9) entsprechend am hinteren Ende der dritten Fußbrettverbindung (2-11) angelenkt ist, das vordere Ende der dritten Fußbrettverbindung (2-11) entsprechend an der Fußbrettstütze (2-13) angelenkt ist, das hintere Ende der zweiten Fußbrettverbindung (2-10) fest mit der vorderen Beinbrettstrebe (2-8) verbunden ist, das vordere Ende der zweiten Fußbrettverbindung (2-10) entsprechend am hinteren Ende der vierten Fußbrettverbindung (2-12) angelenkt ist, das vordere Ende der vierten Fußbrettverbindung (2-12) entsprechend an der Fußbrettstütze (2-13) angelenkt ist, der mittlere Abschnitt der zweiten Fußbrettverbindung (2-10) mit einem Fußbrettdrehstift (2-24) bereitgestellt ist, und der mittlere Abschnitt der dritten Fußbrettverbindung (2-11) entsprechend an dem Fußbrettdrehstift (2-24) angelenkt ist, so dass die dritte Beinbrettverbindung (2-6) in der Lage ist, die erste Fußbrettverbindung (2-9), die dritte Fußbrettverbindung (2-11) und die Fußbrettstütze (2-13) zu bewegen; und
die teleskopische Rückenlehnenanordnung eine erste Rückenlehnenverbindung (2-14), eine zweite Rückenlehnenverbindung (2-15), eine dritte Rückenlehnenverbindung (2-16) und eine vierte Rückenlehnenverbindung (2-17) umfasst, wobei die Unterseite der ersten Rückenlehnenverbindung (2-14) entsprechend an der vertikalen Sitzbrettstrebe (2-20) angelenkt ist, die Oberseite der ersten Rückenlehnenverbindung (2-14) entsprechend am vorderen Ende der zweiten Rückenlehnenverbindung (2-15) angelenkt ist, der obere Teil des hinteren Endes der zweiten Rückenlehnenverbindung (2-15) entsprechend an der Oberseite der dritten Rückenlehnenverbindung (2-16) angelenkt ist, die zweite Rückenlehnenverbindung (2-15) fest verbunden ist mit dem hinteren Ende die Motorstütze-Seitenstrebe (11), und der untere Teil der dritten Rückenlehnenverbindung (2-16) fest verbunden ist mit der vierten Rückenlehnenverbindung (2-17), so dass die Motorstütze (1) in der Lage ist, während der Bewegung die erste Rückenlehnenverbindung (2-14), die zweite Rückenlehnenverbindung (2-15), die dritte Rückenlehnenverbindung (2-16) und die vierte Rückenlehnenverbindung (2-17) zu bewegen.

2. Eisenrahmen für eine zweimotorig angetriebene Stehhilfe-Liege nach Anspruch 1, wobei die Basis (5) eine vordere Basisstrebe (52), eine hintere Basisstrebe (53) und an zwei Seiten angeordnete Basisseitenstreben (51) aufweist und die Innenseite der Basisseitenstrebe (51) mit einer Scharnierstütze (57) bereitgestellt ist; und die geneigte Stütze (8) eine Schrägstützen-Querstrebe (82) und Schrägstützen-Seitenstreben (81) umfasst, die an zwei Seiten der Schrägstützen-Querstrebe (82) angeordnet sind, wobei das vordere Ende der Schrägstützen-Seitenstrebe (81) mit einer drehbaren Rolle (83) bereitgestellt ist, der mittlere Abschnitt der Schrägstützen-Seitenstrebe (81) entsprechend an der Scharnierstütze (57) angelenkt ist und das vordere Ende der Scharnierstütze (57) fest mit einem Begrenzungsblock (58 ) bereitgestellt ist,

3. Eisenrahmen für eine zweimotorig angetriebene Stehhilfe-Liege nach Anspruch 2,
wobei eine Motorverbindungshalterung (61) fest an dem mittleren Abschnitt der Drehstange (6) angeordnet ist und das hintere Ende der elektrischen Schubstange (91) entsprechend an der Motorverbindungshalterung (61) angelenkt ist.

4. Betriebsverfahren für den Eisenrahmen für eine zweimotorig angetriebene Stehhilfe-Liege nach Anspruch 1, umfassend die folgenden Schritte:
A. Bewegen in eine aufrechte Sitzposition: Platzieren des Schlittens (92) am mittleren Teil der elektrischen Schubstange (91), so dass das vordere Ende der geneigten Stütze (8) mit dem Boden der Basis (5) bündig ist, die Basis (5) und die Sitzbrettanordnung sich in einem horizontalen Zustand befinden und die teleskopische Beinbrettanordnung und die teleskopische Fußbrettanordnung sich in einem eingezogenen Zustand befinden, um aufrechtes Sitzen zu realisieren;
B. Bewegen in eine flach liegende Position: Einschalten der elektrischen Schubstange (91), damit sich der Schlitten (92) in Richtung des vorderen Endes der elektrischen Schubstange (91) bewegen kann, so dass der Schlitten (92) die Motorstütze (1) antreibt, um sich in Richtung der teleskopischen Rückenlehnenanordnung zu bewegen, die Motorstütze (1) treibt die Drehverbindung (2-2) an, um sich in Richtung der teleskopischen Rückenlehnenanordnung zu drehen, die Drehverbindung (2-2) treibt die Beinbretttransmissionsverbindung (2-3) an, um sich vorwärts zu bewegen, die Beinbretttransmissionsverbindung (2-3) treibt die erste Beinbrettverbindung (2-4), die zweite Beinbrettverbindung (2-5), die dritte Beinbrettverbindung (2-6) und die vierte Beinbrettverbindung (2-7) zum Ausfahren an, die dritte Beinbrettverbindung (2-6) treibt die erste Fußbrettverbindung (2-9), die zweite Fußbrettverbindung (2-10), die dritte Fußbrettverbindung (2-11), die vierte Fußbrettverbindung (2-12) und die Fußbrettstütze (2-13) zum Ausfahren an, wenn sich die Drehverbindung (2-2) so dreht, dass der Begrenzungsvorsprung (2-2-6) mit dem Begrenzungsniet (2-19) festgeklemmt wird, der Begrenzungsniet (2-19) die Drehverbindung (2-2) begrenzt, die Motorstütze (1) stillsteht und die teleskopische Beinbrettanordnung und die teleskopische Fußbrettanordnung sich in einem ausgefahrenen Zustand befinden, um ein Flachliegen zu realisieren;
C. Bewegen in eine entspannte Liegeposition: Eingeschaltet lassen der elektrischen Schubstange (91), so dass, da die Drehverbindung (2-2) nicht mehr drehbar ist und die Motorstütze (1) verriegelt ist, der Schlitten (92) die elektrische Schubstange (91) antreibt, um sich in Richtung der teleskopischen Beinbrettanordnung zu bewegen, die elektrische Schubstange (91) die Drehstange (6) antreibt, um sich in Richtung der teleskopischen Beinbrettanordnung zu drehen, die Drehstange (6) die geneigte Verbindung (7) antreibt, um sich in Richtung der teleskopischen Beinbrettanordnung vorwärts zu bewegen, die geneigte Verbindung (7) bewirkt eine Drehung der geneigten Stütze (8), die Rolle (83) am vorderen Ende der geneigten Stütze (8) wird abgesenkt, und die Rolle (83) und der Untergrund bilden eine Stütze, sodass das vordere Ende der Basis (5) höher liegt als das hintere Ende der Basis (5), d. h. die teleskopische Beinbrettanordnung und die teleskopische Fußbrettanordnung sind höher als die teleskopische Rückenlehnenanordnung, um die Ruheposition mit den Füßen höher als dem Kopf zu realisieren;
D. Rückstellen in die aufrechte Sitzposition: Einschalten der elektrischen Schubstange (91), um die Rückstellung des Schlittens (92) auf den mittleren Teil der elektrischen Schubstange (91) zu ermöglichen, so dass die elektrische Schubstange (91) die Drehstange (6) antreibt, um sich in Richtung der teleskopischen Rückenlehnenanordnung zu drehen, die Drehstange (6) die geneigte Verbindung (7) antreibt, um sich in Richtung der teleskopischen Rückenlehnenanordnung zu bewegen, die geneigte Verbindung (7) die geneigte Stütze (8) antreibt, um sich zu drehen, um die geneigte Stütze (8) zurückzustellen, die Rolle (83) am vorderen Ende der geneigten Stütze (8) angehoben wird, das vordere Ende der Basis (5) abgesenkt wird, die Basis (5) und der Untergrund eine Stütze bilden, nachdem die geneigte Stütze (8) sich so dreht, dass die Seitenstrebe (81) der geneigten Stütze den Begrenzungsblock (58) berührt, der Begrenzungsblock (58) die geneigte Stütze (8) begrenzt, die geneigte Stütze (8) stillsteht, die Drehstange (6) sich nicht mehr dreht und die elektrische Schubstange (91) sich nicht mehr bewegt, der Schlitten (92) bewegt sich entlang der elektrischen Schubstange (91) in Richtung der teleskopischen Beinbrettanordnung und treibt die Motorstütze (1) an, sich in Richtung der teleskopischen Beinbrettanordnung zu bewegen, die Motorstütze (1) treibt die Drehverbindung (2-2) an, sich in Richtung der teleskopischen Beinbrettanordnung zu drehen, die Drehverbindung (2-2) treibt die Beinbretttransmissionsverbindung an, sich rückwärts zu bewegen, die Beinbretttransmissionsverbindung (2-3) treibt die erste Beinbrettverbindung (2-4) an, die zweite Beinbrettverbindung (2-5), die dritte Beinbrettverbindung (2-6) und die vierte Beinbrettverbindung (2-7) zum Einfahren an, und die dritte Beinbrettverbindung (2-6) treibt die erste Fußbrettverbindung (2-9), die zweite Fußbrettverbindung (2-10), die dritte Fußbrettverbindung (2-11), die vierte Fußbrettverbindung (2-12) und die Fußbrettstütze (2-13) zum Einfahren an, um die aufrechte Sitzposition wiederherzustellen; und
E. Bewegen in eine Standhilfeposition: Einschalten der elektrischen Schubstange (91), damit sich die elektrische Schubstange (91) in Richtung des Schlittens (92) bewegen kann, so dass die elektrische Schubstange (91) die Drehstange (6) antreibt, um sich in Richtung des Schlittens (92) zu drehen, die Drehstange (6) die H-förmige Stütze (4) und das vordere Ende der Verbindungsstange (3) anhebt und die Drehstange (6) über die Drehstangenstütze (62) das vordere Ende der geneigten Verbindung (7) anhebt, um die Sitzbrettanordnung anzuheben, um die Standhilfeposition zu bilden.

## Revendications

1. Cadre en fer pour fauteuil inclinable à assistance au relevage à double moteur, comprenant un mécanisme d'entraînement télescopique, un support télescopique (2) et une base (5),
dans lequel des moyens télescopiques capables de s'étendre et de se rétracter,
et comprenant en outre un support moteur (1), un support incliné (8), un ensemble cadre supérieur et une liaison inclinée (7), dans lequel les parties centrales de deux côtés du support incliné (8) sont articulées de manière correspondante aux parties centrales de deux côtés de la base (5), et l'extrémité arrière du support incliné (8) est disposée d'une manière relevée; l'extrémité avant de l'ensemble cadre supérieur est munie d'une tige rotative pouvant tourner (6), deux extrémités de la tige rotative (6) sont respectivement munies d'un support de tige rotative (62), une extrémité de la liaison inclinée (7) est articulée de manière correspondante au support de tige rotative (62), et l'autre extrémité de la liaison inclinée (7) est articulée de manière correspondante à l'extrémité arrière du support incliné (8), de sorte que la tige rotative (6) est capable d'entraîner, pendant la rotation, le support incliné (8) à se mouvoir; et le support moteur (1) est disposé au-dessus de l'ensemble cadre supérieur, l'extrémité arrière du mécanisme d'entraînement télescopique est articulée de manière correspondante à la tige rotative (6), l'extrémité avant du mécanisme d'entraînement télescopique est en ajustement de transmission avec le support moteur (1), et deux extrémités du support moteur (1) sont respectivement en ajustement de transmission avec le support télescopique (2), de sorte que le mécanisme d'entraînement télescopique est capable d'entraîner, pendant l'extension ou la rétraction, le support moteur (1) et l'ensemble cadre supérieur à se mouvoir, et le support moteur (1) entraîne le support télescopique (2) à s'étendre ou se rétracter
dans lequel le support télescopique (2) comprend un ensemble assise, un ensemble support de jambes télescopique, un ensemble repose-pieds télescopique et un ensemble dossier télescopique, deux côtés de l'extrémité arrière de l'ensemble assise sont respectivement munis d'un ensemble dossier télescopique rétractable, deux côtés de l'extrémité avant de l'ensemble assise sont respectivement munis d'un ensemble support de jambes télescopique rétractable, et l'extrémité avant de l'ensemble support de jambes télescopique est munie d'un ensemble repose-pieds télescopique rétractable; et les extrémités arrière sur deux côtés du support moteur (1) sont en ajustement de transmission avec les ensembles dossiers télescopiques, et les extrémités avant sur deux côtés du support moteur (1) sont en ajustement de transmission avec les ensembles supports de jambes télescopiques, de sorte que le support moteur (1) est capable d'entraîner, lors du mouvement, les ensembles dossiers télescopiques et les ensembles supports de jambes télescopiques à s'étendre ou se rétracter,
dans lequel l'ensemble cadre supérieur comprend un support en forme de H (4) et une barre de liaison (3), deux côtés de l'extrémité avant de l'ensemble assise sont munis de supports d'assise vers le bas, le bas du support d'assise est articulé de manière correspondante à la partie avant du support en forme de H (4), les extrémités arrière sur deux côtés de la base sont munies de supports de base vers le haut, les extrémités arrière sur deux côtés du support en forme de H (4) sont articulées de manière correspondante aux bas des supports de base (56), l'extrémité avant de la barre de liaison (3) est articulée de manière correspondante à une partie centrale du support d'assise (2-22), et l'extrémité arrière de la barre de liaison (3) est articulée de manière correspondante au sommet du support de base (56); le mécanisme d'entraînement télescopique inclut une tige de poussée électrique de type à coulisse (91), la tige de poussée électrique de type à coulisse comprend une tige de poussée électrique (91) et une coulisse (92) qui sont en ajustement de transmission, l'extrémité arrière de la tige de poussée électrique (91) est articulée de manière correspondante à la partie centrale de la tige rotative (6), l'extrémité avant de la tige de poussée électrique (91) est disposée vers l'ensemble dossier télescopique, et la coulisse (92) est disposée de manière fixe sur le support moteur (1); et la coulisse (92) est disposé au niveau de la partie centrale de la tige de poussée électrique (91) lors de l'assemblage,
dans lequel l'ensemble assise comprend en outre une traverse de renfort d'assise (2-21) et des renforts verticaux d'assise (2-20) disposés sur deux côtés, le support d'assise (2-22) est disposé de manière fixe sur le côté inférieur de la partie avant du renfort vertical d'assise (2-20), et l'extrémité avant de chaque renfort vertical d'assise (2-20) est munie d'une liaison rotative (2-2) d'une manière articulée, la liaison rotative (2-2) comprend une première extrémité de liaison (2-2-1), une deuxième extrémité de liaison (2-2-2) et une troisième extrémité de liaison (2-2-3), la partie centrale de la deuxième extrémité de liaison est articulée de manière correspondante au renfort vertical d'assise (2-20), la troisième extrémité de liaison (2-2-3) est en ajustement de transmission avec l'extrémité avant du support moteur (1), une saillie de fin de course (2-2-6) est prévue entre la deuxième extrémité de liaison (2-2-2) et la troisième extrémité de liaison (2-2-3), et le renfort vertical d'assise (2-20) est muni de manière fixe d'un rivet de fin de course (2-19), de sorte que le support moteur (1) est capable d'entraîner la liaison rotative (2-2) à tourner, et la saillie de fin de course (2-2-6) et le rivet de fin de course (2-19) s'adaptent l'un à l'autre pour limiter l'angle de rotation de la liaison rotative (2-2),
dans lequel le support moteur (1) comprend une traverse de renfort de support moteur (12) et des renforts latéraux de support moteur (11) disposés de manière fixe sur deux côtés de la traverse de renfort de support moteur (12), l'extrémité avant du renfort latéral de support moteur (11) est munie de manière fixe d'un renfort avant d'assise (2-1), le renfort avant d'assise (2-1) est articulé de manière correspondante à la troisième extrémité de liaison (2-2-3) de la liaison rotative (2-2), et la coulisse (92) est disposée de manière fixe au niveau de la partie centrale de la traverse de renfort de support moteur (12),
dans lequel l'ensemble support de jambes télescopique comprend une liaison de transmission de support de jambes (2-3), un renfort avant de support de jambes (2-8), une première liaison de support de jambes (2-4) et une deuxième liaison de support de jambes (2-5) qui sont disposées en parallèle, et une troisième liaison de support de jambes (2-6) et une quatrième liaison de support de jambes (2-7) qui sont disposées en parallèle, l'extrémité arrière de la première liaison de support de jambes (2-4) est articulée de manière correspondante à la deuxième extrémité de liaison (2-2-2) de la liaison rotative (2-2), l'extrémité arrière de la seconde liaison de support de jambes (2-2-2) est articulée de manière correspondante à la partie supérieure de l'extrémité avant du renfort vertical d'assise (2-20), l'extrémité arrière de la troisième liaison de support de jambes (2-6) est articulée de manière correspondante à l'extrémité avant de la première liaison de support de jambes (2-4), l'extrémité avant de la troisième liaison de support de jambes (2-6) est articulée de manière correspondante au renfort avant de support de jambes (2-8), l'extrémité arrière de la quatrième liaison de support de jambes (2-7) est articulée de manière correspondante à l'extrémité avant de la deuxième liaison de support de jambes (2-5), l'extrémité avant de la quatrième liaison de support de jambes (2-7) est articulée de manière correspondante au renfort avant de support de jambes (2-8), la partie centrale de la deuxième liaison de support de jambes (2-5) est munie d'un axe de rotation de support de jambes (2-23), la partie centrale de la troisième liaison de support de jambes (2-6) est articulée de manière correspondante à l'axe de rotation de support de jambes (2-23), l'extrémité arrière de la liaison de transmission de support de jambes (2-3) est articulée de manière correspondante à la première extrémité de liaison (2-2-1) de la liaison rotative (2-2), et l'extrémité avant de la liaison de transmission de support de jambes (2-3) est articulée de manière correspondante à l'axe de rotation de support de jambes (2-23), de sorte que la liaison rotative (2-2) est capable d'entraîner la liaison de transmission de support de jambes (2-3) et l'axe de rotation de support de jambes (2-23) à se mouvoir;
l'ensemble repose-pieds télescopique comprend une première liaison de repose-pieds (2-9), une deuxième liaison de repose-pieds (2-10), une troisième liaison de repose-pieds (2-11), une quatrième liaison de repose-pieds (2-12) et un support de repose-pieds (2-13), l'extrémité arrière de la première liaison de repose-pieds (2-9) est articulée de manière correspondante à la partie centrale de la troisième liaison de support de jambes (2-6), l'extrémité avant de la première liaison de repose-pieds (2-9) est articulée de manière correspondante à l'extrémité arrière de la troisième liaison de repose-pieds (2-11), l'extrémité avant de la troisième liaison de repose-pieds (2-11) est articulée de manière correspondante au support de repose-pieds (2-13), l'extrémité arrière de la deuxième liaison de repose-pieds (2-10) est reliée de manière fixe au renfort avant de support de jambes (2-8), l'extrémité avant de la deuxième liaison de repose-pieds (2-10) est articulée de manière correspondante à l'extrémité arrière de la quatrième liaison de repose-pieds (2-12), l'extrémité avant de la quatrième liaison de repose-pieds (2-12) est articulée de manière correspondante au support de repose-pieds (2-13), la partie centrale de la deuxième liaison de repose-pieds (2-10) est munie d'un axe de rotation de repose-pieds (2-24), et la partie centrale de la troisième liaison de repose-pieds (2-11) est articulée de manière correspondante à l'axe de rotation de repose-pieds (2-24), de sorte que la troisième liaison de support de jambes (2-6) est capable d'entraîner la première liaison de repose-pieds (2-9), la troisième liaison de repose-pieds (2-11) et le support de repose-pieds (2-13) à se mouvoir; et
l'ensemble dossier télescopique comprend une première liaison de dossier (2-14), une deuxième liaison de dossier (2-15), une troisième liaison de dossier (2-16) et une quatrième liaison de dossier (2-17), le bas de la première liaison de dossier (2-14) est articulé de manière correspondante au renfort vertical d'assise (2-20), le haut de la première liaison de dossier (2-14) est articulé de manière correspondante à l'extrémité avant de la deuxième liaison de dossier (2-15), le haut de l'extrémité arrière de la deuxième liaison de dossier (2-15) est articulé de manière correspondante au haut de la troisième liaison de dossier (2-16), la deuxième liaison de dossier (2-15) est reliée de manière fixe à l'extrémité arrière du renfort latéral de support moteur (11), et le bas de la troisième liaison de dossier (2-16) est relié de manière fixe à la quatrième liaison de dossier (2-17), de sorte que le support moteur (1) est capable d'entraîner, lors du mouvement, la première liaison de dossier (2-14), la deuxième liaison de dossier (2-15), la troisième liaison de dossier (2-16) et la quatrième liaison de dossier (2-17) à se mouvoir.

2. Cadre en fer pour fauteuil inclinable à assistance au relevage à double moteur selon la revendication 1, dans lequel la base (5) comprend un renfort avant de base (52), un renfort arrière de base (53) et des renforts latéraux de base (51) disposés sur deux côtés, et le côté intérieur du renfort latéral de base (51) est muni d'un support de charnière (57); et le support incliné (8) comprend une traverse de renfort de support incliné (82) et des renforts latéraux de support incliné (81) disposés sur deux côtés de la traverse de renfort de support incliné (82), l'extrémité avant du renfort latéral de support incliné (81) est munie d'une roulette rotative (83), la partie centrale du renfort latéral de support incliné (81) est articulée de manière correspondante au support de charnière (57), et l'extrémité avant du support de charnière (57) est munie de manière fixe d'un bloc de fin de course (58).

3. Cadre en fer pour fauteuil inclinable à assistance au relevage à double moteur selon la revendication 2,
dans lequel un support de liaison moteur (61) est disposé de manière fixe au niveau de la partie centrale de la tige rotative (6), et l'extrémité arrière de la tige de poussée électrique (91) est articulée de manière correspondante au support de liaison moteur (61).

4. Procédé de fonctionnement du cadre en fer pour fauteuil inclinable à assistance au relevage à double moteur selon la revendication 1, comprenant les étapes suivantes:
A. mouvement jusqu'à une position assise droite: mise en place de la coulisse (92) au niveau de la partie centrale de la tige de poussée électrique (91), de sorte que l'extrémité avant du support incliné (8) est alignée avec le bas de la base (5), la base (5) et l'ensemble assise sont dans un état horizontal, et l'ensemble support de jambes télescopique et l'ensemble repose-pieds télescopique sont dans un état rétracté, pour réaliser une assise droite;
B. mouvement jusqu'à une position allongée: activation de la tige de poussée électrique (91) pour permettre à la coulisse (92) de se mouvoir vers l'extrémité avant de la tige de poussée électrique (91), de sorte que la coulisse (92) entraîne le support moteur (1) à se mouvoir vers l'ensemble dossier télescopique, le support moteur (1) entraîne la liaison rotative (2-2) à tourner vers l'ensemble dossier télescopique, la liaison rotative (2-2) entraîne la liaison de transmission de support de jambes (2-3) à se mouvoir vers l'avant, la liaison de transmission de support de jambes (2-3) entraîne la première liaison de support de jambes (2-4), la deuxième liaison de support de jambes (2-5), la troisième liaison de support de jambes (2-6) et la quatrième liaison de support de jambes (2-7) à s'étendre, la troisième liaison de support de jambes (2-6) entraîne la première liaison de repose-pieds (2-9), la deuxième liaison de repose-pieds (2-10), la troisième liaison de repose-pieds (2-11), la quatrième liaison de repose-pieds (2-12) et le support de repose-pieds (2-13) à s'étendre, lorsque la liaison rotative (2-2) tourne jusqu'à ce que la saillie de fin de course (2-2-6) soit serrée avec le rivet de fin de course (2-19), le rivet de fin de course (2-19) limite la liaison rotative (2-2), le support moteur (1) est immobile, et l'ensemble support de jambes télescopique et l'ensemble repose-pieds télescopique sont dans un état déployé, pour réaliser une position allongée;
C. mouvement une position allongée de détente: maintien de la tige de poussée électrique (91) activée, de sorte que, comme la liaison rotative (2-2) ne peut plus tourner et que le support moteur (1) est verrouillé, la coulisse (92) entraîne la tige de poussée électrique (91) à se mouvoir en direction de l'ensemble support de jambes télescopique, la tige de poussée électrique (91) entraîne la tige rotative (6) à tourner en direction de l'ensemble support de jambes télescopique, la tige rotative (6) entraîne la liaison inclinée (7) à se mouvoir en avant dans la direction de l'ensemble support de jambes télescopique, la liaison inclinée (7) entraîne le support incliné (8) à tourner, la roulette (83) à l'extrémité avant du support incliné (8) est abaissée, et la roulette (83) et le support de forme de plancher pour permettre à l'extrémité avant de la base (5) d'être plus haute que l'extrémité arrière de la base (5), c'est-à-dire que l'ensemble support de jambes télescopique et l'ensemble repose-pieds télescopique sont plus hauts que l'ensemble dossier télescopique, pour réaliser la position allongée de repos avec les pieds plus hauts que la tête;
D. rétablissement de la position assise droite: activation de la tige de poussée électrique (91) pour permettre à la coulisse (92) d'être replacée dans la position centrale de la tige de poussée électrique (91), de sorte que la tige de poussée électrique (91) entraîne la tige rotative (6) à tourner vers l'ensemble dossier télescopique, la tige rotative (6) entraîne la liaison inclinée (7) à se mouvoir en direction de l'ensemble dossier télescopique, la liaison inclinée (7) entraîne le support incliné (8) à tourner pour remettre en position le support incliné (8), la roulette (83) à l'extrémité avant du support incliné (8) est relevée, l'extrémité avant de la base (5) est abaissée, la base (5) et le support de forme de plancher, après que le support incliné (8) tourne de sorte le renfort latéral de support incliné (81) touche le bloc de fin de course (58), le bloc de fin de course (58) limite le support incliné (8), le support incliné (8) est immobile, la tige rotative (6) arrête de tourner, et la tige de poussée électrique (91) arrête de se mouvoir, la coulisse (92) se déplace le long de la tige de poussée électrique (91) vers l'ensemble support de jambes télescopique et entraîne le support moteur (1) à se mouvoir vers l'ensemble support de jambes télescopique, le support moteur (1) entraîne la liaison rotative (2-2) à tourner vers l'ensemble support de jambes télescopique, la liaison rotative (2-2) entraîne la liaison de transmission de support de jambes à se mouvoir vers l'arrière, la liaison de transmission de support de jambes (2-3) entraîne la première liaison de support de jambes (2-4), la deuxième liaison de support de jambes (2-5), la troisième liaison de support de jambes (2-6) et la quatrième liaison de support de jambes (2-7) à se rétracter, et la troisième liaison de support de jambes (2-6) entraîne la première liaison de repose-pieds (2-9), la deuxième liaison de repose-pieds (2-10), la troisième liaison de repose-pieds (2-11), la quatrième liaison de repose-pieds (2-12) et le support de repose-pieds (2-13) à se rétracter, pour rétablir la position assise verticale; et
E. Passage à une position d'assistance à la station debout: activation de la tige de poussée électrique (91) pour permettre à la tige de poussée électrique (91) de se mouvoir vers la coulisse (92), de sorte que la tige de poussée électrique (91) entraîne la tige rotative (6) à tourner vers la coulisse (92), la tige rotative (6) entraîne le support en forme de H (4) et l'extrémité avant de la barre de liaison (3) à se relever, et la tige rotative (6) entraîne, par l'intermédiaire du support de tige rotative (62), l'extrémité avant de la liaison inclinée (7) à se relever pour relever l'ensemble assise, pour former la position d'assistance à la station debout.
